# EUROPEAN PATENT APPLICATION

(11) **EP 1 008 287 A1**
(43) Date of publication of application: **14.06.2000**
(21) Application number: 99204218.4
(22) Date of filing: 09.12.1999
(51) Int. Cl.: A01C 3/00, C02F 11/12

(54) **Method and apparatus for processing liquid manure**

(30) Priority: 09.12.1998 NL 1010772
(71) Applicant: H. Haaring Beheer B.V., 7122 PV Aalten (NL)
(72) Inventor: Haaring, Hendrikus, 7122 PV Aalten (NL)
(74) Representative: Ottevangers, Sietse Ulbe

(57) **Abstract**

A method for processing liquid manure, comprising the steps of:
- collecting liquid manure in a collector,
- transmitting a part of the collected manure from the collector to a separator, in particular a mechanical separator,
- dividing, with the separator, the liquid manure into a solid fraction and a liquid fraction,
- feeding the separated liquid fraction back into the collector,
- bringing the separated solid fraction onto or into drying means, in particular drying beds,
- further drying the solid fraction brought onto or into the drier, by blowing relatively dry gas, in particular air, therealong and preferably therethrough, such that a portion of the moisture absorbed in or on the solid fraction is discharged by the gas, and
- feeding at least a portion of the further dried solid fraction back into the collector.

## Description

The invention relates to a method for processing liquid manure.

Liquid manure, i.e. manure having a relatively low percentage of dry substance, is usually collected in a collector such as a liquid manure pit below the animals or separately, from which it can be discharged in order to be, for instance, applied, injected into the ground or dried. The drawback of applying and injecting the manure produced is that a relatively large amount of minerals end up in the ground and ground water unintentionally, such as, for instance, ammonia, nitrogen, phosphates and the like. Further, storage and transport of liquid manure are relatively costly and moreover cause odor nuisance.

It is known to dry liquid manure to obtain a relatively dry fraction which can be dumped, burned or exported for being used as fertilizer elsewhere. For this purpose, the liquid manure is usually reduced by evaporation, with the liquid manure first being introduced into a mechanical separator, whereby a portion of the liquid fraction is separated to obtain a relatively solid fraction having a relatively high percentage of dry substance, for instance 25-30%. This relatively solid fraction can subsequently be further dried, for instance with relatively warm, dry air, whereupon the further dried fraction can be burned and the ashes can be exported as being mineral-containing or pelletized and exported as fertilizer.

These forms of manure-processing have the advantage that the mineral balance can be regulated more properly, which is of particular importance to the livestock farmers, while, moreover, particular environmental advantages are achieved. However, these methods have as a drawback that they are little effective, require relatively high investments and much space, and have a low capacity. Moreover, they require much energy.

The object of the invention is to provide a method for processing liquid manure, wherein the advantages of the above-described methods are maintained, without the drawbacks thereof. To that end, a method according to the invention is characterized by the features of claim 1.

In a method according to the present invention, a relatively solid fraction is separated from liquid manure by means of a mechanical separator, which fraction has a high percentage of dry substance relative to the liquid fraction. This solid fraction is subsequently further dried, to obtain a further dried solid fraction having a particularly high percentage of dry substance. At least a part of this further dried fraction is fed back into a collector for the liquid manure and mixed therein with the collected liquid manure and the liquid fraction fed back from the mechanical separator, such that the percentage of dry substance in the collector is at least approximately maintained or increases. To that end, a part of the further dried fraction can be fed back, but all further dried solid fraction may also be poured back at least a number of times. During further drying of the solid fraction, relatively much moisture is absorbed and discharged by the relatively dry gas, which can be cleaned and further processed in a simple manner.

The particular advantage achieved with a method according to the present invention is that a solid fraction is obtained having a particularly high percentage of dry substance, for instance 80-85%, while no thin fraction is discharged from the apparatus. Indeed, this thin fraction is fed back into the collector. Thus, the usual problems of the thin fraction are readily prevented. The further dried solid fraction can readily be discharged or poured back, in a suitable ratio, while the discharged solid fraction can readily be further processed. In this respect, the mechanical separator has the advantage that a proper separation between the solid fraction having a relatively high percentage of dry substance and the liquid fraction having a relatively low percentage of dry substance can thereby be obtained in a particularly effective and fast manner.

The solid fraction from the mechanical separator has an advantageous loose structure and is therefore properly permeable to gas.

Preferably, with a method according to the present invention, liquid manure is processed having a percentage of dry substance of less than 15%, in particular between 6 and 12% of dry substance, while preferably in the mechanical separator, a solid fraction is separated having more than 12% of dry substance, preferably more than 20% and in particular at least about 30% of dry substance, while the fed-back liquid fraction preferably contains less than 6%, in particular between 2 and 6% of dry substance.

In a particularly advantageous embodiment, a method according to the invention is characterized by the features of claim 8.

Discharging at least a portion of the further dried solid fraction from the drier to a processing apparatus when said steps have been passed through a number of times and the percentage of dry substance in the collector has exceeded a preset value, offers the advantage of preventing the liquid manure in the collector from becoming too thick for the proper processing thereof, in particular for the processing thereof in the mechanical separator. By feeding back no, or at least less further dried solid fraction into the collector, the liquid manure in the collector is diluted with the liquid fraction, because the liquid fraction has a relatively low content of dry substance. Thus, it is provided in a simple manner that the liquid manure in the collector always has a percentage of dry substance within the desired bounds.

In a further embodiment, a method according to the invention is further characterized by the features of claim 9.

When the liquid manure in the collector has too low a percentage of dry substance, it should be replenished in order to obtain a proper processing in the separator. To that end, according to the invention, externally obtained solid fraction, at least dry substance, is added to the liquid manure, preferably in the collector, and mixed therewith. As a result, the percentage of dry substance is brought within the preset bounds again.

As external solid fraction, organic material is preferably used, such as grass, hay, straw or like natural, preferably fibrous materials.

A method according to the present invention is in particular suitable for processing liquid manure of cows or pigs or like mammals.

In a particularly advantageous embodiment, a method according to the present invention is characterized by the features of claim 14.

The use of stable air for drying, at least further drying the solid fraction, offers the advantage of enabling operating in a particularly energetic manner. Indeed, the stable air is heated up by animals present in the stable and will moreover have a relatively low air humidity, so that much moisture can be absorbed therein. In this manner, the solid fraction is dried in an environmentally friendly manner through the use of the energy of animals, in particular of the manure-producing animals themselves. Moreover, as a result, sufficient air is always present. Use can be made of air displacement means which are already present in a stable.

The invention further relates to an apparatus for processing liquid manure, characterized by the features of claim 16.

With such an apparatus, a method according to the present invention can be implemented in a particularly simple and effective manner.

In further elaboration, an apparatus according to the invention is characterized by the features of claim 17.

Positioning a series of drying beds one above the other offers the advantage of enabling relatively compact building, while air, in particular stable air, can readily be blown and/or drawn between the drying beds and through the solid fraction located thereon, for the further drying thereof. By positioning at least a part of the drier above the collector and constructing at least a part of the drying beds associated with the drier so as to be tiltable, the advantage achieved is that in a simple manner, at least a part of the further dried fraction can be poured into the collector.

Further advantageous embodiments of a method or apparatus according to the present invention are given in the subclaims.

To clarify the invention, exemplary embodiments of an apparatus and method according to the present invention will be specified hereinafter, with reference to the accompanying drawings. In these drawings:
Fig. 1 schematically shows an apparatus according to the invention;
Fig. 2 is a schematic, sectional side elevation of an advantageous embodiment of a drier for use with an apparatus according to the present invention; and
Fig. 3 is a sectional top plan view of an apparatus according to the present invention.

In this specification, identical or corresponding parts have identical or corresponding reference numerals.

In this specification, "liquid manure" should be understood to mean manure having a relatively low dry-substance content, for instance less than 15 percent by volume. In this specification, a "solid fraction" should be understood to comprise a fraction separated from the liquid manure, in which fraction the percentage of dry substance is higher than in the liquid manure. In this specification, "liquid fraction" should be understood to mean at least a part separated from the liquid manure, which part has a dry-substance percentage lower than in the liquid manure. Here, "stable air" should be understood to mean air which is at least partially fed from a stable. A "separator" should be understood to mean an apparatus for separating the liquid manure into a solid fraction and a liquid fraction. For this purpose, a mechanical separator comprises means for effecting said separation mechanically. Here, "dry substance" should be understood to comprise all relatively solid parts which are present in the liquid manure and/or in the dry and liquid fraction and can be separated therefrom by means of a separator and/or by drying in.

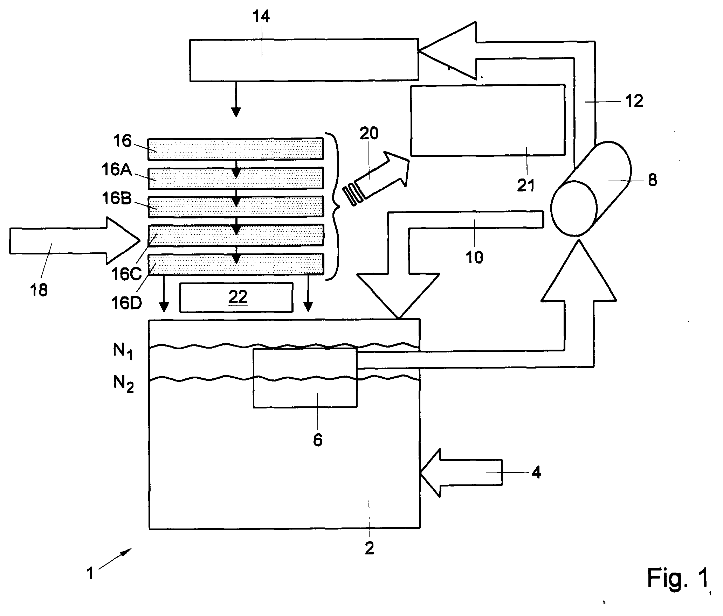

Fig. 1 schematically shows an apparatus 1 according to the invention, comprising a collector 2 in the form of, for instance, a manure pit, to which feed means 4 connect for feeding liquid manure from, for instance, a pig or cow house. Provided in the collector 2 are pump means 6, arranged for feeding liquid manure from the collector 2 to a mechanical separator 8, for instance a pressure separator or centrifuging separator. Such mechanical separator is, for instance, marketed by the firm Fan Separator GmbH, Germany. Via first discharge means 10, the mechanical separator 8 connects to the collector 2 for feeding back liquid fraction from the mechanical separator 8, while via second discharge means 12, the mechanical separator 8 connects to a distributor 14. Via the second discharge means 12, the solid fraction can be discharged from the mechanical separator 8 and distributed, via the distributing system 14, over drying platforms 16, to be further described hereinbelow. Further, air supply means 18 are provided for forcing relatively dry stable air, for instance having a relative air humidity of 50-55%, between and through the drying platforms and solid fraction deposited thereon. Of course, air drying means may be interposed for lowering the relative air humidity. On the opposite side of the air supply means 18, air discharge means 20 connect to the drying platforms for discharging air largely saturated with moisture from the solid fraction and having a relatively high air humidity of, for instance 85-90%, to filter means for cleaning the air. The filter means can, for instance, be designed as a biotrickling filter, chemical filter, or the like, known per se.

Provided under the drying platforms 16 is a discharge belt 22 or a like conveying means, for discharging solid fraction, further dried on the drying platforms, to a processing apparatus such as a pelletizer, burner or the like. At least a part of the drying platforms 16 is disposed above an open side of the collector 2, such that, if so desired, at least a portion of the further dried solid fraction can be fed back into the collector 2 to increase the percentage of dry substance therein.

An apparatus 1 according to Fig. 1 can be used as follows.

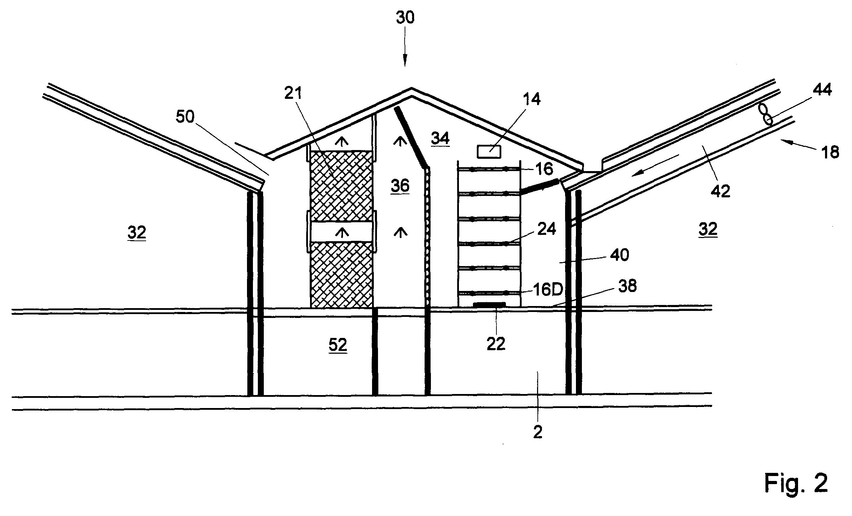

Via the feed means 4, liquid manure having a percentage of dry substance of, for instance, between 6 and 12% and preferably at least averagely about 8%, is introduced into the collector 2 and collected therein. By pump means 6, a portion of the liquid manure having said 8% of dry substance is introduced, preferably continuously, into the mechanical separator 8, where a liquid fraction with, for instance, about 4% dry substance is separated and fed back into the collector 2 via the first discharge means 10. As a result, the concentration of dry substance in the collector 2 will decrease, which is compensated by the feedback of further dried fraction, as will be discussed hereinbelow. In the mechanical separator 8, a relatively dry fraction is obtained with, for instance, about 30% dry substance, which dry fraction is distributed over drying platforms 16 via the second discharge means 12 and the distributing system 14. In the embodiment shown in Fig. 1, five drying platforms 16 are provided, arranged one above the other, which drying platforms at least have an air-permeable bottom and are arranged so as to be at least partially tiltable about pivotal axes 24, as shown in Fig. 2.

At the center of each drying platform 16, a conveying system 26 may be provided, for instance a conveyor belt with distributing means for distributing the relatively loose, dry fraction over the relevant drying platform on either side of the belt. However, in many cases, one manure-metering and mixing apparatus on the upper drying platform may suffice. The looseness is substantially obtained in the mechanical separator 8. By tilting at least a part of the upper drying platform 16, solid fraction deposited thereon can be passed on to the subjacent drying platform 16a, and from there to the subjacent drying platforms 16b, 16c and 16d. Via the air supply means 18, relatively dry air, in particular stable air of said relatively low air humidity, is blown and/or sucked between the drying platforms 16 and through the air-permeable bottom of each drying platform, through the relatively loose fraction lying thereon. As it passes the relatively dry fraction, moisture is absorbed from the solid fraction by the relatively dry air, such that the percentage of dry substance in the solid fraction is increased, or at least the percentage of moisture therein is decreased. In this manner, the solid fraction can be further dried to become a further dried fraction having, for instance, 80% of dry substance, preferably even more than 85% of dry substance. Depending on the drying time, a percentage of 90% of dry substance or more can even be realized.

From the lowermost drying platform 16d, a part of the further dried fraction lying thereon can be poured onto the conveyor belt 22 to be discharged to the processing apparatus (not shown), while another part of the further dried fraction can be poured along the conveyor belt 22 into the liquid manure in the collector 2. As described before, this means that the decrease of the percentage of dry substance in the collector by feedback of the liquid fraction via the first discharge means 10 is compensated by the further dried solid fraction that is poured back. Through a suitable choice in the amount of poured-back, further dried fraction, the percentage of dry substance in the collector can be brought back within the desired limits of, for instance, 6-12% of dry substance, more in particular to the above-mentioned 8% of dry substance. It will be understood that in this manner, almost any desired percentage of dry substance can be set and maintained in the collector 2. A percentage of dry substance of 6-12%, or at least less than 15%, offers the advantage that such liquid manure is processable relatively easily with a mechanical separator 8, while a good efficiency is nevertheless obtained. The desired average concentration of dry substance can of course be set depending on, for instance, the separator 8 employed.

By using an above-described method, moisture is abstracted from the liquid manure, at least from the solid fraction separated therefrom, which moisture can readily be cleaned and discharged substantially without any environmental burden. Also when liquid manure such as slurry is periodically or continuously fed from a stable via feed means 4, the level in the collector 2 will fall, for instance from level N1 to level N2, in that moisture is being abstracted. This means that the dry substance will pass through a number of cycles via the pump means, the separator and either the first discharge means 10 or the drying platforms 16, before being discharged from the apparatus 1 via the discharge belt 22 as further dried solid fraction. Depending on, inter alia, the feed of liquid manure, the average percentage of dry substance, the desired maximum percentage of dry substance and the amount of further dried solid fraction fed back, an optimal number of cycles can readily by chosen or, optionally, continuous operation may take place.

When the fed liquid manure has too low a percentage of dry substance, for instance 4% or less, externally obtained dry substance may be added, for instance cut grass, in particular roadside grass, hay, straw or the like. Preferably, natural, fibrous materials are used, because these materials can retain relatively much moisture and can moreover be processed with the dry substance as further dried solid fraction and need not be separated therefrom.

If necessary, the liquid manure can entirely or partially be stored temporarily, when, for instance, insufficient dry stable air is present for obtaining the desired drying. Of course, relatively dry gas obtained in another manner may also be used for drying the relatively loose solid fraction on the drying platforms 16.

Fig. 2 schematically shows a drier for use with an apparatus according to Fig. 1, in sectional side elevation. This drier 30 is, for instance, accommodated between two stables 32 in which pigs, cows or the like are kept. The drier 30 comprises a housing having a first compartment 34 and a second compartment 36. Included in the first compartment are the drying platforms 16, above a collector 2 provided under the floor 38.

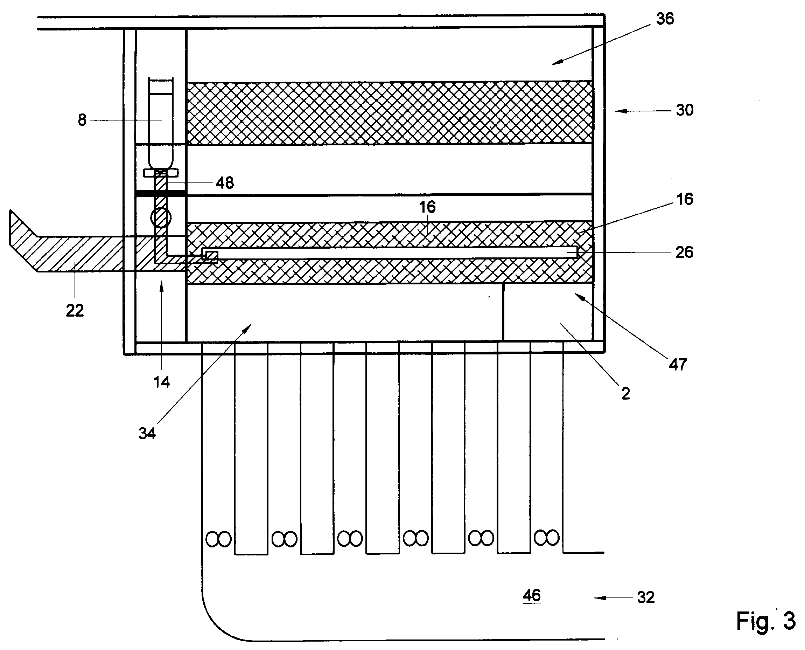

Fig. 3 is a schematic top plan view of a drier 30, showing the separator 8, the manure discharge belt 22, the distributor 14 and a top plan view of a drying platform 16 with metering means 26. Provided in the compartment 34 and adjacent the drying platforms 16 is an air supply space 40, to which a series of supply pipes 42 connect forming part of the air supply means 18. The air supply pipes 42 each contain a fan 44 with which, via a central exhaust duct 46, stable air can be drawn in from a stable 32 and introduced via the air supply tubes 42 into the air supply space 40 and, from there, between and through the drying platforms 16 and the solid fraction located thereon. As appears from Fig. 2, each drying platform 16 has two tiltable parts, each being tiltable about a pivotal axis 24. As appears from Fig. 3, an end 46 of the drying platforms 16 which is remote from the distributor 14 lies above the collector 2, such that further dried solid fraction can be poured therein from the drying platform 16. The length of the projecting part can preferably be set, for instance by displacing the discharge belt 22 and/or the platforms 16. Mixing of the further dried fraction and the liquid manure can, for instance, be effected by the pump means 6 or a separate mixer. By means of a vertical conveyor 48, the solid fraction can be elevated from the mechanical separator 8 to a position above the upper platform, where the solid fraction, via the distributing means 14 and the belt 26, can be distributed over the upper drying platform 16. The drying platform 16 has, for instance, a perforated bottom or a bottom manufactured from wire mesh or the like.

The stable air moistened by its passage through the solid fraction is fed into the second space 36 and through filter apparatuses 21 disposed therein, for instance said biotrickling filter, for cleaning the air in a manner known per se before it can be discharged via air exhaust means 50. If necessary, a pit 52 below the second space 36 can be used for nitrification and denitrification. As appears from the specification and the drawings, an apparatus according to the present invention may be of a relatively compact and simple design, is environmentally friendly and has a high efficiency.

Preferably, in a method according to the present invention, a mechanical separator is used with which a solid fraction is discharged containing more than 50%, preferably more than 60%, and in particular more than 75% of the dry substance that was present in the liquid manure fed. Thus, a relatively high efficiency is obtained. Preferably, the liquid manure is fed continuously, at least semi-continuously, to obtain also a relatively continuous flow of discharged, further dried fraction. This simplifies further processing. If so desired, a part of the separated liquid fraction can be added to the further dried fraction, for instance prior to the introduction of the further dried fraction into the collector. Also, for instance when insufficient space is available for a series of drying beds above the collector, the further dried fraction can be mixed with liquid fraction adjacent the drying beds, for instance on the conveyor belt 22, after which this mixture is fed into the mechanical separator.

The invention is in no way limited to the embodiments described and shown in the specification and Figures. Many variations thereof are possible within the framework of the invention outlined by the claims. Thus, it is possible to use several separators or separators of a different type, preferably mechanical separators, fed from one collector, or several collectors may be connected to one separator. Accordingly, different types of liquid manure may be mixed with at least different percentages of dry substance for obtaining a favorable average. Also, other filtering means may be used for cleaning the air or other gases used for drying. The liquid manure may be stored partially, at least temporarily, and so may the fed-back liquid fraction, for later use, in particular when the fed liquid manure has a relatively low percentage of dry substance. The stored liquid fraction may then be admixed when liquid manure of a relatively high percentage of dry substance is to be processed. Further, different types of feed and discharge means and different driers may be used, as in the case of perforated conveyor belts. The set-up of a drier according to the present invention may of course also be of different design, for instance with moving drying platforms, a relatively extensive drying floor for the further drying of the solid fraction or comparable apparatus suitable for drying. With an apparatus and method according to the present invention, it is of course also possible to process other types of manure.

These and many comparable variations are understood to fall within the framework of the invention.

## Claims

1. A method for processing liquid manure, comprising the steps of:
- collecting liquid manure in a collector,
- transmitting a part of the collected manure from the collector to a separator, in particular a mechanical separator,
- dividing, with the separator, the liquid manure into a solid fraction and a liquid fraction,
- feeding the separated liquid fraction back into the collector,
- bringing the separated solid fraction onto or into drying means, in particular drying beds,
- further drying the solid fraction brought onto or into the drier, by blowing relatively dry gas, in particular air, therealong and preferably therethrough, such that a portion of the moisture absorbed in or on the solid fraction is discharged by the gas, and
- feeding at least a portion of the further dried solid fraction back into the collector.

2. A method according to claim 1, wherein the gas, with moisture entrained thereby, is cleaned.

3. A method according to claim 1 or 2, wherein liquid manure having less than 15% of dry substance, preferably less than 12% and preferably between 6% and 12% of dry substance, is collected in the collector.

4. A method according to any one of the preceding claims, wherein a solid fraction of the liquid manure is separated from a liquid fraction by the separator, the separated solid fraction comprising more than 12%, preferably more than 20% and in particular at least about 30% of dry substance and the fed-back liquid fraction preferably comprising less than 6%, more in particular between 2% and 6% of dry substance.

5. A method according to any one of the preceding claims, wherein from the mechanical separator, a solid fraction is discharged containing more than 40%, preferably more than 60% and in particular at least 75% of the solid substance included in the liquid manure fed into the mechanical separator.

6. A method according to any one of the preceding claims, wherein the solid fraction is dried in such a manner that it contains less than 20% of moisture, in particular less than 15% of moisture and preferably less than 10% of moisture.

7. A method according to any one of the preceding claims, wherein liquid manure is introduced into the collector semi-continuously or continuously.

8. A method according to any one of the preceding claims, wherein at least a portion of the further dried solid fraction is discharged from the drier to a processing apparatus when said steps have been passed through a number of times and the liquid manure in the collector contains more than a preselected percentage of dry substance, in particular more than 12%.

9. A method according to any one of the preceding claims, wherein externally obtained solid fraction, at least dry substance, is added to the liquid manure when the liquid manure contains less than a preselected percentage of dry substance.

10. A method according to claim 9, wherein as external solid fraction, at least dry substance, grass, in particular roadside grass, hay, straw or like natural, preferably fibrous materials are added.

11. A method according to claim 9 or 10, wherein the external solid fraction, at least dry substance is added to the liquid manure in the collector.

12. A method according to any one of the preceding claims, wherein liquid manure of cows or pigs is processed.

13. A method according to any one of the preceding claims, wherein the solid fraction is given a loose structure in or following the mechanical separator, in such a manner that air or a like gas can be blown through the solid fraction.

14. A method according to any one of the preceding claims, wherein as gas for further drying the solid fraction, stable air is used.

15. A method according to any one of the preceding claims, wherein liquid manure, in particular thin fraction is added to the further dried solid fraction.

16. An apparatus for processing liquid manure, comprising a collector for the manure, means for passing therefrom a portion of the liquid manure to a separator, in particular a mechanical separator, arranged for dividing the liquid manure into a substantially solid fraction and a substantially liquid fraction, there being provided feed-back means for feeding the liquid fraction back into the collector and feed-through means for feeding the solid fraction into a drier, blowing and/or suction means for passing a relatively dry gas along the solid fraction in the drier, means for feeding the solid fraction, further dried in the drier, back into the collector or, selectively, to a further processing apparatus.

17. An apparatus according to claim 16, wherein the drier comprises a series of drying beds disposed one above the other, the blowing and/or suction means being designed for passing at least a part of the relatively dry gas through the drying beds and solid fraction located thereon.

18. An apparatus according to claim 16 or 17, wherein tiltable drying beds are provided, such that solid fraction provided on a superjacent drying bed can be passed on to a subjacent drying bed.

19. An apparatus according to any one of claims 16-18, wherein the drier is disposed at least partially above the collector.
